Europäisches Patentamt

European Patent Office

Office européen des brevets

(19)

(11) Veröffentlichungsnummer: **0 259 682**
**B1**

(12) **EUROPÄISCHE PATENTSCHRIFT**

(45) Veröffentlichungstag der Patentschrift:
**03.05.89**

(21) Anmeldenummer: **87112235.4**

(22) Anmeldetag: **24.08.87**

(51) Int. Cl.⁴: **C03B 33/12**

(54) Zange zum Brechen von Glas.

(30) Priorität: **10.09.86 DE 3630773**

(43) Veröffentlichungstag der Anmeldung:
**16.03.88 Patentblatt 88/11**

(45) Bekanntmachung des Hinweises auf die Patenterteilung:
**03.05.89 Patentblatt 89/18**

(84) Benannte Vertragsstaaten:
**FR GB IT NL**

(56) Entgegenhaltungen:
**BE-A- 521 578**
**DE-B- 1 042 190**
**DE-C- 926 929**
**DE-U- 8 624 224**
**GB-A- 1 538 828**

(73) Patentinhaber: **Josef Bohle Stiftung + Co. KG.,**
**Dieselstrasse 10, D-5657 Haan(DE)**

(72) Erfinder: **Bohle, Ulrich, 19, Buchweizenberg,**
**D-5650 Solingen(DE)**
Erfinder: **Siebenlist, Bernd, 20a, Willicherstrasse,**
**D-4154 Tönisvorst(DE)**

(74) Vertreter: **Tackenberg, Karl, Dipl.-Ing., Birkenweiher 15,**
**D-5650 Solingen(DE)**

## Beschreibung

Die Erfindung betrifft eine Zange zum Brechen von Glas an einer vorgeritzten Linie, mit zwei gegenüberliegend angeordneten Backen, von denen die eine außenseitig einen zentrischen, als Druckpunkt dienenden Vorsprung aufweist, mit dem die Zange unterhalb der vorgeritzten Linie an das Glas angesetzt wird, und von denen die andere als Gegenlager dient (siehe z.B. BE-A 521 578).

Die zum Brechen von Glas gebräuchlichen, unter der Bezeichnung Dreipunkt- oder Schnittlaufzangen bekannten Werkzeuge schließen mit ihren Backen beim Erzeugen eines Bruches das Glas an drei Punkten zwischen sich ein. Derartige Zangen haben wesentliche Nachteile, die in folgendem zu erblicken sind. Bei Erzeugen eines Bruches läßt sich nicht ausschließen, daß sich der Bruch nach Schließen der Zange unbeabsichtigt fortsetzt und möglicherweise seitlich aus der vorgeritzten Linie ausbricht. Der Grund hierfür ist in folgendem zu erblicken. Der Anstieg des auf das Glas wirkenden Biegemomentes, durch das der Bruch entlang der vorgeritzten Linie erzeugt werden soll, ist so steil, daß in dem Augenblick, in dem das den Bruch einleitende Biegemoment erreicht ist, das Glas plötzlich einknickt. Die Folge hiervon ist ein sprunghafter weiterer Anstieg des Biegemomentes, der das Glas unkontrolliert und damit auch außerhalb der vorgeritzten Linie brechen läßt. Es ist daher auch mit einer derartigen Zange des Erzeugen von Brüchen an einer bogenförmig verlaufenden vorgeritzten Linie insbesondere bei kleineren Glasstücken, wie sie beispielsweise bei der Herstellung sogenannter Tiffany-Lampen benötigt werden, durch die Gefahr des Ausbrechens des Bruches aus der gewünschten Kontur erschwert. Wenn aber der Bruch nicht genau an der vorgeritzten Linie erzeugt wird, ist das Glas nicht verwendbar. Es sind weiterhin die bekannten Dreipunktzangen nur für den Fall verwendbar, daß die geritzte Linie im rechten oder ungefähr im rechten Winkel zu der Kante des Glases verläuft, in die die Linie ausläuft. Denn bei Auslaufen der vorgeritzten Linie im spitzen Winkel zu der Glaskante liegen die Backen der an das Glas angesetzten Dreipunktzange nur an zwei Punkten an dem Glas an. Der Bruch kann aber nur dann erzeugt werden, wenn die Dreipunktzange an der Stelle, an der die vorgeritzte Linie in die Glaskante ausläuft, so angesetzt werden kann, daß ihre Längsachse in der Verlängerung der vorgeritzten Linie liegt. Das gleiche trifft für den Fall zu, daß die vorgeritzte Linie zum Brechen schmaler Streifen parallel zu der Glaskante in einem solchen Abstand von letzterer verläuft, der kleiner ist als die halbe Breite der Backen der Dreipunktzange. Schließlich können auch die Dreipunktzangen nicht seitlich an die vorgeritzte Linie angesetzt werden.

Der Erfindung liegt die Aufgabe zugrunde, eine Zange der eingangs genannten Gattung so weiter auszubilden, daß das beim Brechen des Glases auftretende Biegemoment mit zunehmendem Schließdruck auf die Zangenschenkel nur geringfügig ansteigt und daß die Zange auch seitlich an die vorgeritzte Linie angesetzt werden kann.

Die Lösung der Aufgabe besteht erfindungsgemäß darin, daß bei einer Zange der eingangs genannten Art
die als Gegenlager dienende Backe geringfügig elastisch und länglich ist,
an ihrer der gegenüberliegenden Backe zugekehrten Seite ebenflächig gestaltet ist und um eine senkrecht auf ihrer der gegenüberliegenden Backe abgewendeten Seite stehenden Achse drehbar gelagert ist.

Die als Gegenlager dienende Backe der Zange besteht vorzugsweise aus starrem Werkstoff, beispielsweise Kunststoff, mit einem Belag aus geringfügig elastischem Werkstoff an der der gegenüberliegenden Backe zugekehrten Seite. Es ist ferner die als Gegenlager dienende Backe vorzugsweise rechteckig gestaltet.

Durch die erfindungsgemäße Ausbildung der als Gegenlager dienenden Backe der Zange und infolge der Durchbiegbarkeit des Glases tritt zum Erzeugen des Bruches in dem dem Vorsprung der benachbarten Backe gegenüberliegenden Bereich der als Gegenlager dienenden Backe eine Verformung ein, die nach den Enden der Backen hin abnimmt. Hierdurch steigt das Biegemoment, wie praktische Versuche ergeben haben, mit zunehmendem Schließdruck auf die Zangenschenkel nur geringfügig an, mit der Folge, daß bei jedesmaligem Schließen der Zange der Bruch nur um einen Schritt fortgesetzt wird. Die Zange ist daher auch besonders zum Brechen kleinerer Glasstücke geeignet, wie sie beispielsweise bei der Herstellung von Tiffany-Lampen verwendet werden.

Infolge der ebenflächigen Ausbildung an der Seite der als Gegenlager dienenden Backe, mit der diese an das Glas angesetzt wird, kann der Bruch sowohl an spitzwinklig auslaufenden vorgeritzten Linien wie auch an solchen Linien erzeugt werden, die parallel zur Kante des Glases auch bei geringem Abstand von der Kante verlaufen. Schließlich kann auch die Zange infolge der Drehbarkeit der als Gegenlager dienenden Backe seitlich an die vorgeritzte Linie angesetzt werden, da im Gegensatz zu den bekannten Zangen die Backe infolge ihrer Drehbarkeit, wie erforderlich, rechtwinklig zu der vorgeritzten Linie eingestellt werden kann.

Die Erfindung ist nachstehend in einem Ausführungsbeispiel anhand der Zeichnung näher erläutert. Es zeigt:

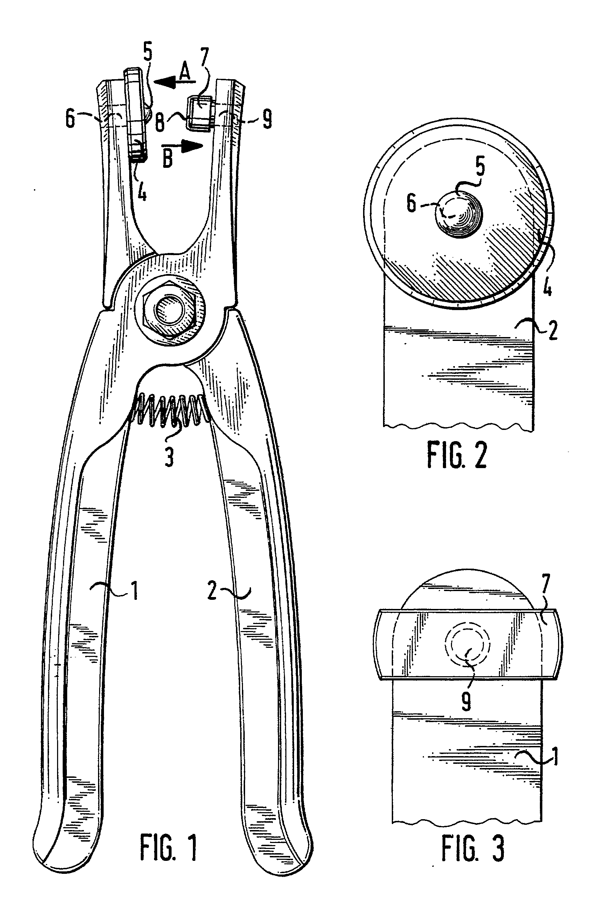

Figur 1 die Zange in Ansicht,
Figur 2 die teilweise gezeichnete Zange in vergrößertem Maßstab in Ansicht in Pfeilrichtung A der Figur 1 und
Figur 3 in Ansicht in vergrößertem Maßstab in Pfeilrichtung B der Figur 1.

Mit 1, 2 sind die beiden Zangenschenkel bezeichnet, die schwenkbar miteinander verbunden sind und unter der Spreizwirkung einer Schraubenfeder 3 stehen. Am vorderen Ende des Zangenschenkels 2 ist eine aus Kunststoff bestehende, kreisrunde Backe 4 angeordnet, die vorderseitig einen zentrisch angeformten Vorsprung 5 aufweist, der nach dem freien Ende hin verjüngt ist. An der Rückseite der Backe 4 ist ein Zapfen 6 angeformt, mit dem die Backe 4 in einem Bohrloch des Zangenschenkels 2 drehfest, jedoch lösbar gelagert ist. An dem Zangenschenkel 1 ist, der Backe 4 gegenüberliegend, eine längliche, aus Kunststoff bestehende Backe 7 angeordnet, die vorderseitig ebenflächig gestaltet und mit einem Belag 8 aus geringfügig elastischem Werkstoff versehen ist. An die Backe 7 ist rückseitig ein Zapfen 9 angeformt, mit dem die Backe 7 in einem Bohrloch des Zangenschenkels 1 stramm drehbar und lösbar gelagert ist.

## Patentansprüche

1. Zange zum Brechen von Glas an einer vorgeritzten Linie, mit zwei gegenüberliegend angeordneten Backen (4, 7), von denen die eine (4) außenseitig einen zentrischen, als Druckpunkt dienenden Vorsprung (5) aufweist, mit dem die Zange unterhalb der vorgeritzten Linie an das Glas angesetzt wird, und von denen die andere (7) als Gegenlager dient, dadurch gekennzeichnet, daß die als Gegenlager dienende Backe (7) geringfügig elastisch und länglich ist, an ihrer der gegenüberliegenden Backe (4) zugekehrten Seite ebenflächig gestaltet ist und um eine senkrecht auf ihrer der gegenüberliegenden Backe (4) abgewendeten Seite stehenden Achse drehbar gelagert ist.

2. Zange nach Anspruch 1, dadurch gekennzeichnet, daß die als Gegenlager dienende Backe (7) aus geringfügig gummielastischem Werkstoff besteht.

3. Zange nach Anspruch 1, dadurch gekennzeichnet, daß die als Gegenlager dienende Backe (7) an ihrer der benachbarten Backe (4) zugekehrten Seite mit einem Belag (8) aus geringfügig gummielastischem Werkstoff versehen ist.

4. Zange nach einem der Ansprüche 1–3, dadurch gekennzeichnet, daß die als Gegenlager dienende Backe (7) rechteckig gestaltet ist.

## Claims

1. Glass breaking pliers for breaking glass at a pre-scratched line having two oppositely arranged jaws (4, 7) one of said jaws (4) comprising at its outer side a entral extension (5) serving as a pressure point by means of which the pliers are put onto the glass below the pre-scratched line, the other jaw (7) serving as a counter support, characterised in that the jaw (7) serving as a counter support is slightly resilient and elongated, is formed plane at its side facing the opposite jaw (4), and is mounted rotatably about an axis which is perpendicular to its side facing away from the opposite jaw (4).

2. Pliers according to claim 1, characterised in that the jaw (7) serving as a counter support is made of a slightly rubber-resilient material.

3. Pliers according to claim 1, characterised in that the jaw (7) serving as a counter support is provided at its side facing the opposit jaw (4) with a coating (8) of a slightly rubber-resilient material.

4. Pliers according to one of claims 1–3, characterised in that the jaw (7) serving as a counter support is formed rectangularly.

## Revendications

1. Pince pour casser le verre à une ligne préalablement tracée, possédant deux mâchoires opposées (4, 7) dont l'une (4) présente du côté extérieur une saillie centrique (5) servant de point de pression et avec laquelle la pince est appliquée sur le verre, et dont l'autre (7) sert de butée, pince caractérisée par ce que la mâchoire (7) servant de butée est légèrement élastique et oblongue, que sa face orientée vers la mâchoire opposée (4) est plane et qu'elle tourne sur un axe vertical disposé du côté détourné de la mâchoire opposée (4).

2. Pince suivant revendication 1, caractérisée par ce que la mâchoire (7) servant de butée est réalisée en matière d'une légère élasticité de caoutchouc.

3. Pince suivant revendication 1, caractérisée par ce que la mâchoire (7) servant de butée est pourvue, à sa face orientée vers la mâchoire voisine (4), d'un revêtement (8) en matière d'une légère élasticité de caoutchouc.

4. Pince suivant une des revendications 1 à 3, caractérisée par ce que la mâchoire (7) servant de butée a une forme rectangulaire.

FIG. 1

FIG. 2

FIG. 3